# EUROPÄISCHE PATENTANMELDUNG

(11) **EP 1 898 192 A1**
(43) Veröffentlichungstag der Anmeldung: **12.03.2008**
(21) Anmeldenummer: 06120184.4
(22) Anmeldetag: 06.09.2006
(51) Int. Cl.: G01G 21/00, G01G 23/00

(54) **Wägevorrichtung**

(71) Anmelder: Mettler-Toledo AG, 8606 Greifensee (CH)
(72) Erfinder: Schilling, Peter, 8854 Siebnen (CH); Metzger, Andreas, 8708 Männedorf (CH); Burkhard, Hans-Rudolf, 8492 Wila (CH); Koeppel, Thomas, 8618 Oetwil am See (CH); Emery, Jean-Christophe, 8005 Zürich (CH)

(57) **Zusammenfassung**

Wägevorrichtung mit mindestens einer Wägezelle und mit einer der Aufnahme mehrerer Wägezellen dienenden Aufnahmestruktur, wobei die mindestens eine Wägezelle eine ihrer Befestigung in der Aufnahmestruktur dienende erste Befestigungseinrichtung und die Aufnahmestruktur eine dazu komplementäre zweite Befestigungseinrichtung aufweist. Die Befestigungseinrichtungen die Wägezelle sind derart ausgestaltet, dass sie mittels eines durch eine einfache, auf die Wägezelle einwirkende Betätigung ver- und entriegelbaren Formschlusses und/oder Kraftschlusses halten beziehungsweise freigeben. Die mindestens eine Wägezelle ist in der Aufnahmestruktur in einem Bauraum angeordnet ist, dessen Ausdehnung in einer Ebene orthogonal zur Lastrichtung durch die Bauräume benachbarter in der Aufnahmestruktur anzuordnende Wägezellen begrenzt

## Beschreibung

Die Erfindung betrifft die Befestigung einer Wägezelle oder mehrerer Wägezellen in einer Wägevorrichtung.

Eine gattungsgemässe Wägevorrichtung, beispielsweise eine solche zum Wiegen gleich gearteter Wägegüter, findet bevorzugt in automatisierten Produktions- und Testanlagen ihren Einsatz, wobei für eine Integration in diese Anlagen insbesondere Waagen in modularer Ausführung - so genannte Wägemodule - geeignet sind. Dabei handelt es sich häufig um Waagen oder um Wägezellen, bei denen die Anzeigeeinheit von der Waage beziehungsweise Wägezelle getrennt angeordnet ist, beispielsweise in einer Anlage mit einer zentralen Anzeige für mehrere solcher Wägemodule beziehungsweise Wägezellen. Einsatzgebiete von solchen integrierten Wägemodulen sind Anlagen für die Produktion und/oder Überprüfung von kleinen, relativ teuren Teilen, beispielsweise in Abfüll- und Verpackungsmaschinen für Tabletten, Kapseln, Ampullen, etc. in der Pharmaindustrie, oder bei der Kontrolle von Kugellagern. Beim Wiegen gleichgearteter Wägegüter oder auch dem sogenannten Batch-Wiegen handelt es sich um einen Vorgang, bei dem mehrere Lasten individuell zu wiegen sind, sei dies zum Zwecke des Kontrollierens, des Dosierens und/oder des Abfüllens etc. auf engem Raum.

Derartige Vorrichtungen zum Wiegen gleich gearteter Wägegüter sind im Stand der Technik bekannt. Dabei handelt es sich vorwiegend um Reihenanordnungen von Wägezellen. Weitere Anordnungen stellen darauf ab, die Wägezellen in einer Flächenanordnung satellitenartig um eine Reihenanordnung von Lastträgern, welche an die Abstände der Zufuhrelemente einer vorhandenen Beschickungsvorrichtung anzupassen sind, zu platzieren, da häufig das einzelene Wägemodul beziehungsweise die einzelne Wägezelle zu gross ist, um entsprechend kleine Abstände einzuhalten.

In einer nach dem Prinzip der elektromagnetischen Kraftkompensation arbeitenden Wägezelle wird die Kraft, die durch eine Last auf der Waagschale verursacht wird, durch ein Kraftkompensationsglied, das aus einem Permanentmagneten und einer Spule besteht, kompensiert, wobei der durch die Spule fliessende Strom zur Erzeugung der Kompensationskraft gemessen wird. Dieser Messwert ist proportional zur aufgelegten Last. Dieser Messwert ist aber auch abhängig von der Position der Spule im Magnetfeld des Permanentmagneten und deshalb muss die Spule beim Erfassen des Messwertes stets dieselbe Position gegenüber dem Magneten aufweisen. Die Position der Spule nach Aufbringen der Last wird über einen Lagegeber ermittelt und der Strom an der Spule solange erhöht, bis die von der Last verursachte Verschiebung der Spule gegenüber dem Permanentmagneten kompensiert ist. Dabei erfolgt die Messung des Spulenstroms, welcher ein Mass für das Gewicht der aufgelegten Last darstellt. Eine solche Wägezelle wird in der US 4 280 577 offenbart, wobei die Wägezelle zwischen dem Lastaufnehmer und dem Kraftkompensationsglied eine Kraftübertragungsvorrichtung aufweist, welche die von der Last erzeugte Kraft am Lastaufnehmer an das Kraftkompensationsglied überträgt und je nach Lastbereich unter- oder übersetzt.

Eine nach demselben Prinzip arbeitende Wägezelle wird in der US 4 099 587 offenbart. In dieser Patentschrift ist der Lastaufnehmer direkt mit dem Kraftkompensationsglied über ein Kraftübertragungsgestänge gekoppelt. Am Kraftübertragungsgestänge ist die bewegliche Seite des Lagegebers angebracht, während die feststehende Seite des Lagegebers mit dem gehäusefesten Bereich der Wägezelle, beziehungsweise mit dem feststehenden Bereich des Kraftkompensationsglieds, starr verbunden ist. Diese als Direktmessprinzip bezeichnete Anordnung wird vorzugsweise im Niederlastbereich eingesetzt.

In der DE 20 2005 015 932 U1 ist eine Wägezelle zum Einsetzen in eine Aufnahmehalterung beschrieben. Zur Herstellung einer lösbaren mechanischen und elektrischen Verbindung mit einer zugehörigen, komplementär dazu ausgebildeten Aufnahmehalterung weist die Wägezelle Ausrichtelemente auf, die zum Zusammenwirken mit Ausrichtelementen der Aufnahmehalterung ausgebildet sind. Die Aufnahmehalterung ist zur dauerhaften Anordnung in einer für Wiegeaufgaben bestimmten Maschine vorgesehen.

Wenn das schnelle Messen der Einzelmassen von Wägegütern wichtig ist, bietet sich eine Anordnung von mehreren Wägezellen an, um beispielsweise das parallele Messen der Einzelmassen, beispielsweise gleich gearteter Wägegüter, zu ermöglichen. Es besteht besonderer Bedarf an Wägevorichtungen, welche für den Anwendungsbereich einer Massebestimmung im Milligramm- bis Grammbereich geeignet sind. Im Falle von Wägezellen mit im Vergleich zu den Abständen der Zufuhrelemente einer Beschickungsvorrichtung grossen Abmessungen wird bei Einsatz einer komplexen, insbesondere einer mit flächig angeordneten Zufuhrelementen versehenen Beschickungsvorrichtung, auch die im Stand der Technik offenbarte sternförmige Anordnung den Anforderungen nicht gerecht. Da die Abmessungen der Wägezellen, sowohl deren Länge als auch deren Breite betreffend, häufig grösser ist als der geforderte Abstand der Mittellängsachsen ihrer Lastträger, kann lediglich eine begrenzte Anzahl von Wägezellen um eine vorgesehene und durch die Zufuhrelemente der Beschickungsvorrichtung vorgegebene Fläche für die Anordnung der Lastträger herum platziert werden.

Es ist daher Aufgabe der Erfindung, eine an eine komplexe, mit geringen Abständen der Zufuhrelemente versehene Beschickungsvorrichtung für Wägeguter angepasste Anordnung von Lastträgern und daher eine Anordnung von mit den Lastträgern verbundenen Wägezellen zur Verfügung zu stellen. Diese Wägezellen sollen in die Anordnung in einfacher Weise eingebaut und wieder aus dieser entfernt werden können.

Diese Aufgabe wird gelöst mit einer Wägevorrichtung mit mindestens einer Wägezelle und mit einer der Aufnahme mehrerer Wägezellen dienenden Aufnahmestruktur. Die mindestens eine Wägezelle weist eine ihrer Befestigung in der Aufnahmestruktur dienende erste Befestigungseinrichtung und die Aufnahmestruktur weist eine dazu komplementäre zweite Befestigungseinrichtung auf.

Um ein einfaches Einsetzen einer Wägezelle in die Aufnahmestruktur und ein entsprechend einfaches Entfernen einer Wägezelle aus der Aufnahmestruktur zu ermöglichen, sind die Befestigungseinrichtungen dergestalt, dass sie die Wägezelle mittels eines durch eine einfache, auf die Wägezelle einwirkende Betätigung ver- und entriegelbaren Formschlusses und/oder Kraftschlusses halten beziehungsweise freigeben. Die Wägezellen sind daher einzeln auswechselbar, da sie bevorzugt gleichgeartet ausgestaltet sind. Dies erhöht die Servicefreundlichkeit einer solchen Wägevorrichtung.

Indem die mindestens eine Wägezelle in der Aufnahmestruktur in einem Bauraum angeordnet ist, dessen Ausdehnung in einer Ebene orthogonal zur Lastrichtung durch die Bauräume benachbarter in der Aufnahmestruktur anzuordnender Wägezellen begrenzt ist, kann die Wägevorrichtung an eine mit geringen Abständen ihrer Zufuhrelemente versehene Beschickungsvorrichtung für Wägeguter angepasst werden.

In diesem Zusammenhang sei eine Wägezelle als eine Vorrichtung zur Messung der Kraft einer Last, insbesondere einer auf einem mit der Wägezelle verbundenen Lastaufnehmer platzierten Last, zu verstehen, wobei jedoch das Vorhandensein elektronischer Komponenten zur Auswertung des elektrischen Mess-Signals nicht zwingend ist.

Die Wägevorrichtung zeichnet sich somit durch ein hohes Mass an Kompaktheit aus und gewährleistet durch die Möglichkeit des parallelen Verwiegens von beispielsweise kleinen, relativ teueren Produkten einen schnellen Wägeprozess und damit einen hohen Durchsatz an Wägegütern.

In besonderer Weise ist dabei die Aufnahmestruktur für die Aufnahme mehrerer Wägezellen in einer zweidimensionalen Flächen- oder Matrixstruktur ausgestaltet. Ein Bauraum in der genannten Ebene entspricht somit der grössten Ausdehnung der Wägezelle in dieser Ebene. Dies hat zur Folge, dass die Lastaufnehmer in räumlicher Nähe zur entsprechenden Wägezelle angeordnet sein können.

Die Ausdehnung des Bauraums in Lastrichtung ist oberhalb und unterhalb der Wägezelle nur durch angrenzende Systeme, beispielsweise den Operationsraum einer Beschickungsvorrichtung oder beispielsweise eine Gehäusewand der Wägevorrichtung begrenzt. In einer Ausführungsform, bei der Wägezellen auf mehreren Ebenen angeordnet sind, können die angrenzende Ebene der Wägevorrichtung die Bauräume für die darunter liegenden Wägezellen begrenzen.

Die Aufnahmestruktur kann beispielsweise eine Grundplatte aufweisen, an der die zweite Befestigungseinrichtung angeordnet ist. Die zweite Befestigungseinrichtung kann mit einer ersten an der Unterseite der Wägezelle angeordneten Befestigungseinrichtung zusammenwirken. Das Befestigen und wieder Entfernen der Wägezelle in die bzw. aus der Aufnahmestruktur erfolgt hier bevorzugt von oben her.

Als weitere Ausführungsform weist die Aufnahmestruktur eine Befestigungsplatte auf, in welcher die mindestens eine Wägezelle einhängbar ist und die zweite Befestigungseinrichtung in die Befestigungsplatte integriert ist. Das Befestigen und wieder Entfernen der Wägezelle in die bzw. aus der Aufnahmestruktur kann hierbei sowohl von oben her als auch von unten her erfolgen je nach spezifischer Ausgestaltung der Befestigungseinrichtung.

Die zusammenwirkenden Befestigungseinrichtungen stellen eine mechanische und bevorzugt auch eine elektrische Verbindung zwischen der mindestens einen Wägezelle und der Aufnahmestruktur her, so dass die Wägezelle sicher in der Aufnahmestruktur verankert bzw. einfach wieder gelöst werden kann und gleichzeitig mit Strom versorgt wird, sowie elektrische Signale senden und/oder empfangen kann.

In einem bevorzugten Ausführungsbeispiel weist die Wägezelle ein Gehäuse auf, an dem die erste Befestigungseinrichtung angeordnet ist.

Zur Verbindung beziehungsweise zur Trennung der Wägezelle und der Aufnahmestruktur, weisen die erste und die zweite Befestigungseinrichtung zusammenwirkend einen Rastmechanismus oder einen Schnappmechanismus auf.

Um das sichere und einfache Verbinden und/oder Trennen von Wägezelle und Aufnahmestruktur zu ermöglichen weist die erste und/oder die zweite Befestigungseinrichtung eine Führungsvorrichtung auf, welche anzeigt, wie die Wägezelle mit der Aufnahmestruktur verbunden werden soll. Die Führungsvorrichtung kann auch dergestalt sein, dass sie ein falsches Verbinden der Befestigungselemente verunmöglicht. Auch ist eine Führungsvorrichtung möglich, die die bei der Befestigung zusammenwirkenden Elemente zu einander positioniert und zu einander führt und somit den Verbindungsvorgang erleichtert. Bei den Führungselementen kann es sich beispielsweise um eine einfache Markierung und/oder um einen mit einer Nut und/oder Aufnahme zusammenwirkenden Stift handeln.

Ein Rastmechanismus oder Schnappmechanismus kann realisiert werden, indem die erste Befestigungseinrichtung mindestens eine Nut oder Vertiefung und die zweite Befestigungseinrichtung mindestens zwei, insbesondere drei, auf Federelementen gelagerte Kugeln aufweisen, wobei beim Einsetzen der Wägezelle in die Aufnahmestruktur die Kugeln in die mindestens eine Nut oder Vertiefung einrasten.

In einer weiteren Ausführungsform weist die erste Befestigungseinrichtung mindestens zwei Bohrungen auf und die zweite Befestigungseinrichtung mindestens zwei diagonal einander gegenüberliegend angeordnete Spreizstifte, wobei beim Einsetzen der Wägezelle in die Aufnahmestruktur die Spreizstifte in die Bohrungen einrasten, und so eine sichere Verbindung zwischen Wägezelle und Aufnahmestruktur gewährleisten.

In einer bevorzugten Ausführungsform sind die mechanische Befestigung und die elektrischen Verbindung in der Aufnahmestruktur räumlich voneinander getrennt. Diese Trennung ist sehr vorteilhaft, da so die elektrischen Zuleitungen einfach gegen elektromagnetische Störeinflüsse abgeschirmt werden können. Ferner bewirkt eine Trennung, dass bei entsprechender Ausgestaltung keine oder nur sehr geringe mechanische Spannungen auf die elektrische Verbindung einwirken.

Zur Identifikation jeder einzelnen Wägezelle in einer Wägevorrichtung und auch zur Bestimmung der Reproduzierbarkeit der Wägeresultate kann es sinnvoll sein, jede Wägezelle mit einem sie eindeutig kennzeichnenden Code zu versehen. Dieser Code kann dann mit einem entsprechenden Gegenstück, welches an der Aufnahmestruktur angeordnet ist, erfasst werden. Es kann sich dabei unter anderem um einen Strichcode, einen Matrixcode oder ein passives Element einer RFID-Kennzeichnungseinrichtung handeln. Insbesondere ist auch das Vorhandensein eines Speicherchips denkbar, auf welchem relevante Daten der Wägezelle gespeichert sind.

Für die Wägung gleich gearteter Wägegüter bietet sich insbesondere an, eine Wägevorrichtung mit einer vorgegebenen Anzahl von Wägezellen und einer gleichen Anzahl von Lastaufnehmern auszugestalten. Dabei dürfte diese Anzahl vorwiegend durch eine Beschickungsvorrichtung und deren Anzahl an Zufuhreinrichtungen vorgegeben sein.

Die Erfindung wird anhand von Beispielen, wie sie stark schematisiert in den Zeichnungen dargestellt sind, im Folgenden beschrieben. Es zeigen:
- Figur 1: eine perspektivische Darstellung einer Wägevorrichtung mit sechs Wägezellen, die in einer flächigen Matrix angeordnet sind und eine erste Ausführungsform von Befestigungseinrichtungen zur Befestigung jeder Wägezelle in einer Aufnahmestruktur aufweisen;
- Figur 2: eine perspektivische Darstellung einer Wägevorrichtung mit vier Wägezellen, die in einer flächigen Matrix angeordnet sind und eine zweite Ausführungsform von Befestigungseinrichtungen zur Befestigung jeder Wägezelle in einer Aufnahmestruktur aufweisen;
- Figur 3: eine perspektivische Darstellung einer Wägevorrichtung mit mehereren Wägezellen, die jeweils in einer flächigen Matrix angeordnet sind, wobei die Aufnahmestruktur gleichzeitig für die Aufnahme der Wägezellen in mehreren Ebenen ausgebildet ist;
- Figur 4: eine perspektivische Darstellung eines Ausschnitts einer Wägezelle mit einer weiteren Ausführungsform von Befestigungseinrichtungen,wobei eine Befestigungseinrichtung ein Element zur Ankopplung an eine Aufnahmestruktur aufweist;
- Figur 5: die Wägezelle aus Figur 4 in einer perspektivischen Darstellung in einer von Figur 4 verschiedenen Ansicht, wobei das Element zur Ankopplung in seiner Verbindung mit der Aufnahmestruktur gezeigt ist;
- Figur 6: eine perspektivische Darstellung einer Wägezelle mit einer zweiten Ausführungsform von Befestigungseinrichtungen zur Befestigung der Wägezelle in einer Aufnahmestruktur, wobei die elektrische und die mechanische Verbindung in verschiedenen Ebenen erfolgt;
- Figur 7: eine Seitenansicht eines Ausschnitts einer Wägezelle im Bereich der Befestigungseinrichtungen.

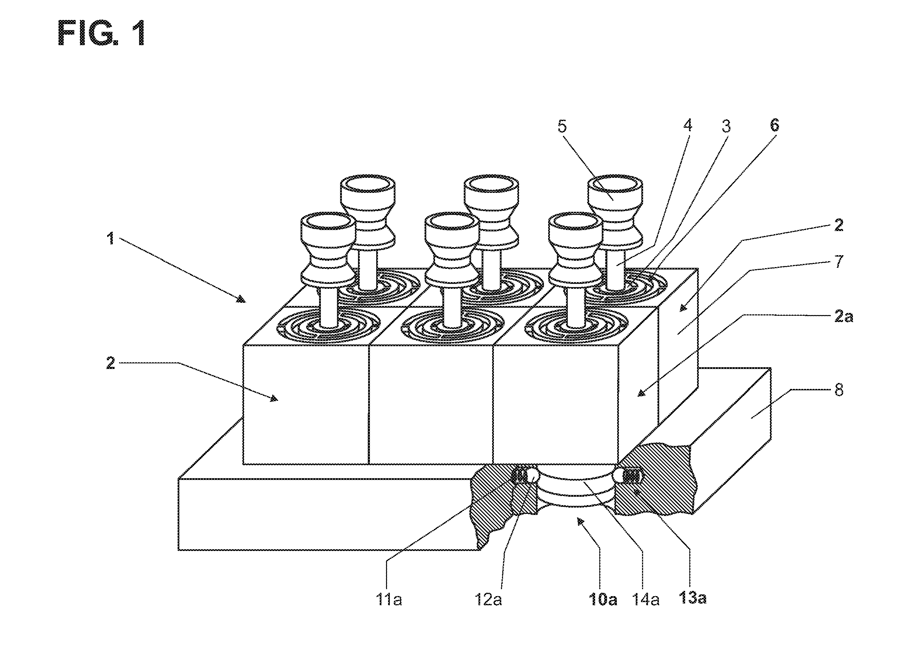

Die Figur 1 zeigt in perspektivischer Darstellung eine Wägevorrichtung 1 mit sechs Wägezellen 2, die in einer flächigen Matrix angeordnet sind. Die Wägezellen 2 weisen je eine, hier nicht dargestellte, im Innern der Wägezellen 2 eingebaute Anordnung von Spule und Magnet auf, die mit den Lastaufnahmebereichen 3 verbunden sind. Ausgehend von den Lastaufnahmebereichen 3 erstreckt sich jeweils entgegen der Lastrichtung ein Kraftübertragungsgestänge 4, an dessen Ende jeweils ein Lastaufnehmer 5 angebracht ist. Oberhalb der Lastaufnehmer 5 befindet sich üblicherweise der Operationsraum einer nicht dargestellten Beschickungsanlage. Jeder Lastaufnahmebereich 3 einer Wägezellen 2 ist Teil einer unter der Wirkung einer Last in Lastrichtung auslenkbaren Parallelführung, wobei in der Figur für jede Wägezelle 2 von der Parallelführung der Lastaufnahmebereich 3, der obere Parallellenker 6 und der feststehende Bereich 7 der Wägezelle 2 erkennbar ist.

Jede Wägezelle 2 ist an einer Aufnahmestruktur in Form einer Grundplatte 8 befestigt. Für die in der Figur 1 rechts vorne gezeigte Wägezelle 2a gibt der gebrochen gezeichnete Ausschnitt der Grundplatte 8 die Sicht auf eine erste Ausführungsform von Befestigungseinrichtungen zur Befestigung der Wägezelle 2a an der Grundplatte 8 frei. Die Befestigungseinrichtungen weisen eine zweite Befestigungseinrichtung 13a auf, welche direkt in die Grundplatte 8 integriert ist. Diese weist mindestens zwei - in bevorzugter Weise drei oder vier - jeweils auf einer Feder 11 a gelagerte Kugeln 12a auf, welche im Zustand der Befestigung der Wägezelle 2a mit der Grundplatte 8 in eine umlaufende Nut 14a einer ersten mit der Wägezelle 2a verbundenen Befestigungseinrichtung 13a eingreifen beziehungsweise einrasten. Somit ist die Wägezelle 2a lösbar mit der Grundplatte 8 verbunden und kann bei Bedarf gegen eine gleich geartete Wägezelle ausgewechselt werden, beispielsweise im Servicefall oder, wenn die Wägevorrichtung 1 an einen anderen Lastbereich angepasst werden soll. Selbstredend sind die anderen in der Figur 1 dargestellten Wägezellen 2 zum Zwecke ihrer Austauschbarkeit mit gleichen Befestigungseinrichtungen versehen. Um ein Einrasten zu garantieren, sind die Achsen der Kugeln 12a und die der Nut 14a geringfügig in vertikaler Richtung gegeneinander versetzt, so dass beim Einsetzen ein Druck auf die Kugeln ausgeübt wird, welcher diese in die Nut hinein zieht.

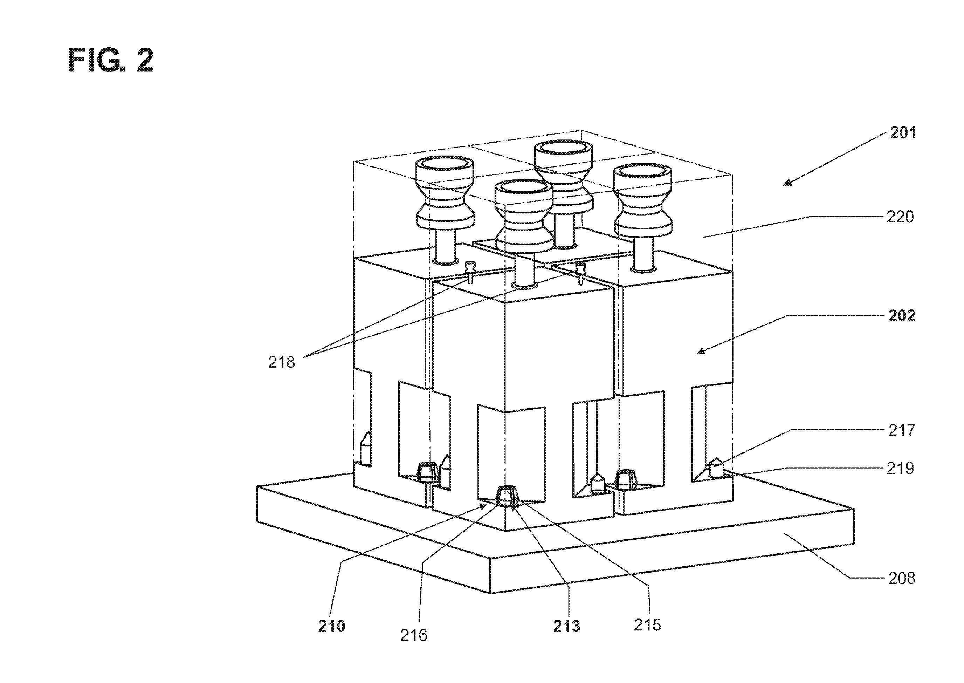

In der Figur 2 ist ebenfalls in perspektivischer Darstellung eine weitere Ausführungsform einer Wägevorrichtung 201 mit vier Wägezellen 202, die in einer flächigen Matrix angeordnet sind, gezeigt. Jede Wägezelle 202 ist in einem durch strichpunktierte Linien in der Figur dargestellten Bauraum 220 angeordnet, dessen Ausdehnung in einer Ebene orthogonal zur Lastrichtung durch die Bauräume 220 benachbarter in der Aufnahmestruktur angeordneter Wägezellen 202 begrenzt ist. Die Aufnahmestruktur umfasst hier im wesentlichen eine Grundplatte 208. Die Wägezellen 202 weisen in Zusammenwirken mit der Grundplatte 208 eine zweite Ausführungsform von Befestigungseinrichtungen zur Befestigung jeder Wägezelle 202 in der Aufnahmestruktur, d.h. hier der Grundplatte 208 auf. Die Befestigungseinrichtungen umfassen eine zweite Befestigungseinrichtung 213, die zwei diagonal an der Grundplatte 208 angeordnete Spreizstifte 215 aufweist, welche in einer ersten in der Wägezelle 202 integrierten Befestigungseinrichtung 213, die diagonal an der Wägezelle 202 angeordnete Bohrungen 216 aufweist, eingeschoben sind. Nach Passieren der Bohrung 216 blockieren die Spreizstifte 215 ein Lösen der Wägezelle 202 von der Grundplatte 208 und geben diese erst wieder frei, wenn eine genügend hohe Zugkraft auf die Wägezelle 202 wirkt. In der Figur 2 sind noch Führungsbolzen 217 zu sehen, die ebenfalls an der Grundplatte 208 befestigt sind und in weitere Bohrungen 219 der Wägezelle 202 eingreifend diese zum Zwecke der genauen Positionierung auf der Grundplatte 208 führen. Eine Wägezelle 202 ist bevorzugt mit zwei Nocken 218 versehen, an welchen beim Entfernen der Wägezelle aus der Aufnahmestruktur zum heraus ziehen angegriffen werden kann, beispielsweise mittels eines Werkzeugs.

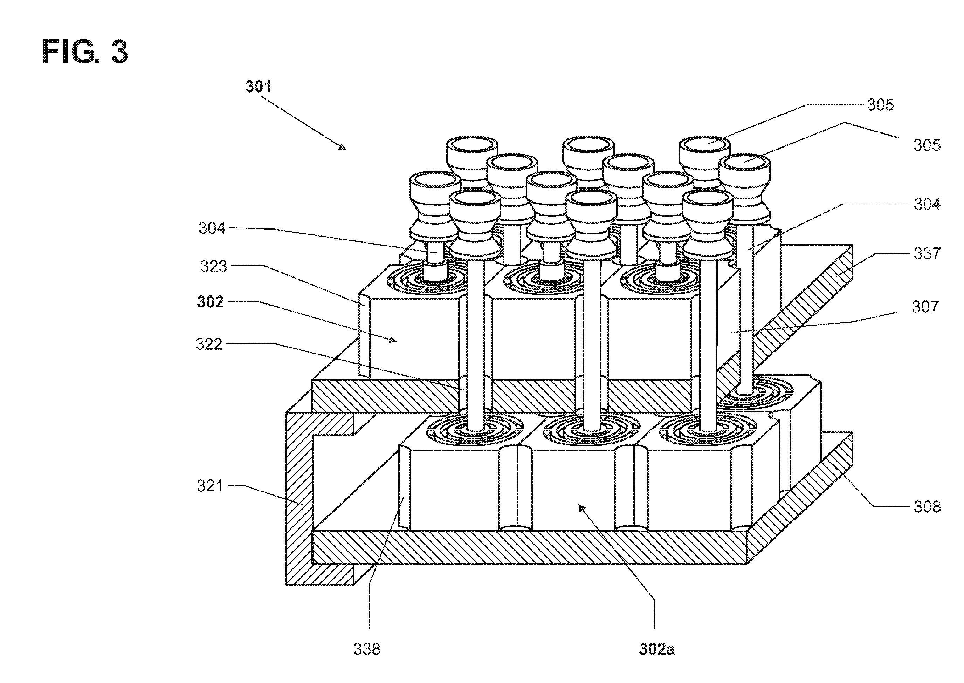

Figur 3 zeigt in perspektivischer Darstellung eine Wägevorrichtung 301 mit mehreren Wägezellen 302, 302a, die in einer flächigen Matrix angeordnet sind. Für die Beschreibung des Aufbaus der Wägezellen 302, 302a wird auf die Beschreibung der Figuren 1 und 2 verwiesen. Die Wägevorrichtung 301 umfasst zwei parallel ausgerichtete Grundplatten 308, 337, welche in Lastrichtung voneinander beabstandet angeordnet sind und über mindestens ein vertikal angeordnetes Verbindungselement 321 miteinander starr verbunden sind. Das Verbindungselement 321 kann beispielsweise als ein im Wesentlichen in sich geschlossener Rahmen ausgebildet sein, welcher den zwischen den beiden Grundplatten 308, 337 entstandenen Spalt nach aussen abdeckt oder auch als Kasten in den die Grundplatten 308, 337 eingesetzt werden. Die untere Grundplatte 308, als Teil einer Aufnahmestruktur, entspricht im Wesentlichen einer der in den Figuren 1 oder 2 bereits gezeigten Grundplatten 8, 208. Die obere Grundplatte 337, als weiterer Teil der Aufnahmestruktur, weist zusätzlich noch Durchführungen 322 auf. Diese Durchführungen 322 setzen sich an den Kontaktpunkten der Bauräume durch an den vertikalen Ecken der Wägezellen 302 ausgebildete Aussparungen 323 fort. Die Durchführungen 322 sowie die Aussparungen 323 an den Ecken der feststehenden Bereiche 307 der Wägezellen 302 dienen als Durchgänge für die Kraftübertragungsgestänge 304 der auf der unteren Grundplatte 308 angeordneten Wägezellen 302a. Auf der unteren Grundplatte 308 können sowohl Wägezellen ohne Aussparung als auch wie hier dargestellt Wägezellen 302a mit Aussparungen angeordnet werden. Die Anordnung der Wägezellen 302, 302a auf zwei verschiedenen, parallel ausgerichteten Grundplatten 308, 337 ermöglicht die Unterbringung der im Wesentlichen doppelten Anzahl von Wägezellen 302, 302a auf derselben Grundfläche. Die Wägemechanik der Wägezellen 302, 302a entspricht derjenigen jener Wägezellen, welche bereits im Zusammenhang mit den Figuren 1 und 2 beschrieben wurden. Es versteht sich von selbst, dass beispielsweise die Lastaufnehmer 305 sowie die obere Grundplatte 337 mit den auf ihr angeordneten Wägezellen 302 als Ganzes einfach entfernt werden können, um falls notwendig einzelne auf der Grundplatte 308 angeordnete Wägezellen 302a austauschen zu können.

Wie in der Figur 3 ersichtlich und mit oben beschriebenen Durchgängen der Kraftübertragungsgestänge 304 durch die Durchführungen 322 und die Aussparungen 323 in Einklang stehend sind die Wägezellen 302a der unteren Grundplatte 308 gegenüber jenen Wägezellen 302 der oberen Grundplatte 337 um jeweils eine halbe Länge und eine halbe Breite ihres Bauraums gegeneinander versetzt.

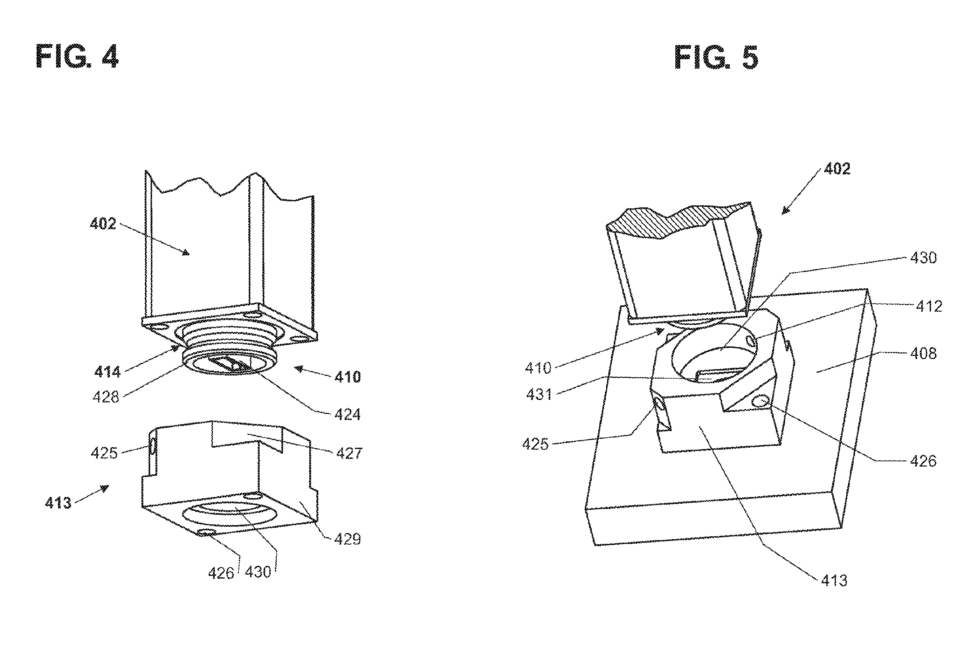

In den Figuren 4 und 5 ist jeweils ein Ausschnitt einer ersten Ausführungsform von Befestigungseinrichtungen für eine Wägezelle aus zwei unterschiedlichen Perspektiven gezeigt, wobei gleiche Elemente mit denselben Bezugszeichen versehen sind. An der Wägezelle 402 ist orthogonal zur Lastrichtung eine erste Befestigungseinrichtung 410 angeordnet. Die erste Befestigungseinrichtung 410 ist als zylindrische Hülse 428 mit einer umlaufenden Nut 414 ausgestaltet. Im Inneren der Hülse 428 ist ein elektrischer Anschlussstecker 424 angeordnet, über den die Wägezelle 402 elektrische Signale austauschen und/oder mit Strom versorgt werden kann. Die zweite Befestigungseinrichtung 413, welche mit der ersten Befestigungseinrichtung 410 zusammenwirkt, wodurch die Wägezelle 402 in einer Aufnahmestruktur einrasten kann, ist hier in Form eines Sockels 429 mit einer parallel zur Lastrichtung ausgerichteten, kreisförmigen Aufnahme 430 ausgestaltet. Der Innendurchmesser der Aufnahme 430 entspricht im Wesentlichen dem Aussendurchmesser der zylindrischen Hülse 428. Der Sockel 429 weist ferner mindestens zwei parallel zur Lastrichtung ausgerichtete Bohrungen 426 zur Ankopplung der zweiten Befestigungseinrichtung 413 an einer in der Figur 4 nicht dargestellten Grundplatte auf, welche in der Figur 5 als Grundplatte 408 dargestellt ist. Die Bohrungen 426 sind in Bezug auf die kreisförmige Aufnahme 430 einander gegenüberliegend unter einem Winkel von 180° zueinander angeordnet. In Bezug auf Figur 4 weist der Sockel 429 oberhalb der vertikalen Bohrungen 426 jeweils einen Absatz 427 auf. In Bezug auf die kreisförmige Aufnahme 430 befinden sich zwischen den Bohrungen 426 zwei orthogonal zur Lastrichtung ausgerichtete Durchführungen 425. In diesen Durchführungen können die bereits in Figur 1 gezeigten Kugeln 412 und Federn angeordnet werden, welche im eingebauten Zustand der Wägezelle gegen die Nut 414 gedrückt werden wodurch die Wägezellen 402 in den Sockel 429 einrasten.

In Figur 5 ist die Anordnung der zweiten Befestigungseinrichtung 413 auf einer Grundplatte 408 dargestellt. Ferner ist die im Inneren der Aufnahme 430 angeordnete Anschlussbuchse 431 für den elektrischen Anschlussstecker 424 zu erkennen.

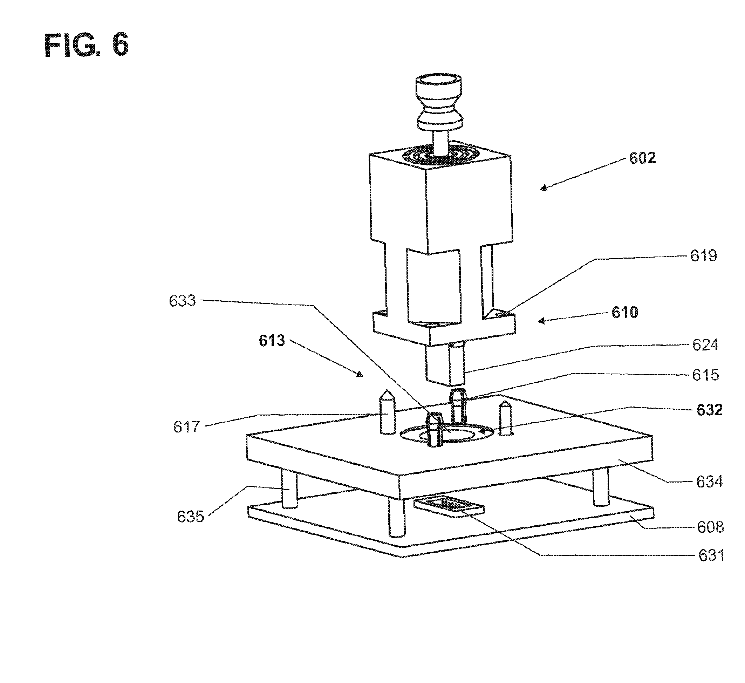

Figur 6 zeigt eine weitere Ausführungsform von Befestigungseinrichtungen in perspektivischer Darstellung, bei der eine Wägezelle 602 an eine Befestigungsplatte 634 angekoppelt wird. An der Befestigungsplatte 634 ist eine zweite Befestigungseinrichtung 613 angeordnet, die zwei diagonal an der Befestigungsplatte 634 angeordnete Spreizstifte 615 aufweist, welche in einer ersten in der Wägezelle 602 integrierten Befestigungseinrichtung 610, die diagonal an der Wägezelle 602 angeordnete Bohrungen 616 aufweist, eingeschoben sind. Nach Passieren der Bohrung 616 blockieren die Spreizstifte 615 ein Lösen der Wägezelle 602 von der Befestigungsplatte 634 und geben diese erst wieder frei, wenn eine genügend hohe Zugkraft auf die Wägezelle 602 wirkt. Weiterhin sind an der Befestigungsplatte 634 noch Führungsbolzen 617 zu sehen, die ebenfalls an der Befestigungsplatte 634 befestigt sind und in weitere Bohrungen 619 der Wägezelle 602 eingreifend diese zum Zwecke der genauen Positionierung auf der Befestigungsplatte 634 führen. Zwischen den Führungsstiften 617 und den Spreizstiften 615 ist eine kreisförmige Vertiefung 632 zu erkennen, welche eine Durchführung 633 umschliesst. Durch diese Durchführung 633 kann ein elektrischer Anschlussstecker 624 der Wägezelle 602 geführt werden. Der Anschlussstecker 624 dient der Herstelleung einer elektrischen Verbindung mit einer Anschlussbuchse 631, welche an einer in dieser Ansicht unterhalb der Befestigungsplatte 634 beabstandet angeordneten Grundplatte 608 angeordnet ist. Der elektrische Anschluss ist hier als Anschlussstecker 624 ausgestaltet, wobei es auch möglich ist, diesen als einfaches Kabel mit einem entsprechende Anschluss auszugestalten. Die Grundplatte 608 und die Befestigungsplatte 634 sind durch Abstandshalter 635 verbunden. Der die Durchführung 633 umschliessende Rand der Vertiefung 632 dient als Auflage für die den Stecker 624 tragende Struktur, welche insbesondere einen elektronischen Print umfasst. In dieser Darstellung sind die Spreizstifte 615 sowie die Führungsstifte 610 direkt mit der Befestigungsplatte 634 verbunden.

Ebenso wäre es denkbar, die Befestigungseinrichtung 613 als Element zu gestalten, welches auf eine Grundplatte auf- und/oder eingesetzt würde.

Es ist darauf zu achten, dass bei der Herstellung der mechanischen und der elektrischen Verbindung der Wägezelle 602 mit der Aufnahmestruktur das System nicht überbestimmt ist. Dies wird dadurch gelöst, dass die Anschlussbuchse 631 in der Grundplatte 608 schwimmend gelagert ist, das heisst ein Spiel im Zehntelmillimeterbereich aufweist.

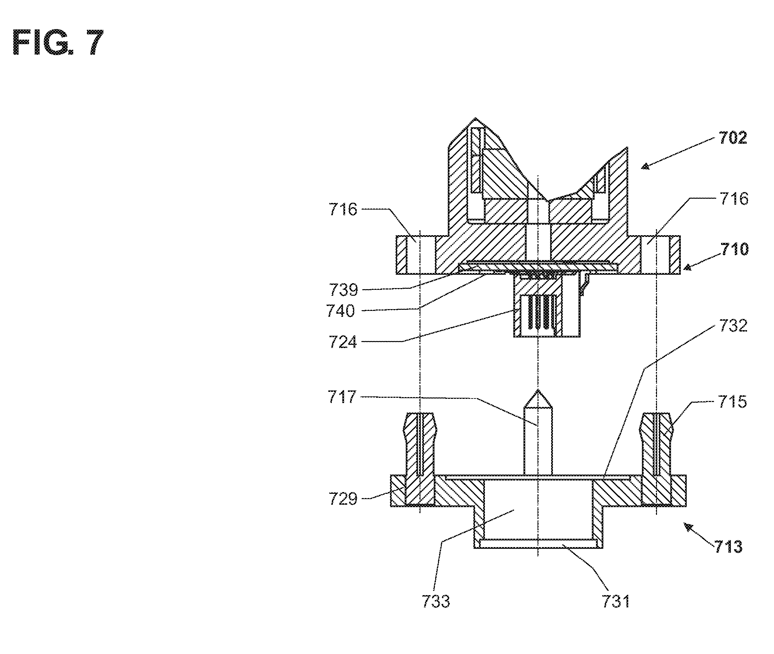

Eine weitere Ausführungsform von Befestigungseinrichtungen ist in Figur 7 im Schnitt gezeigt. Die erste Befestigungseinrichtung 710 entspricht weitestgehend der bereits in Figur 6 gezeigten. In der Figur 7 ist die den Anschlussstecker 724 tragende Struktur als elektronischer Print 739 erkennbar. An diesem Print 739 kann nun ein Speicherchip 740 angeordnet sein, auf dem spezifische Daten der Wägezelle 702 abgelegt sind.

Diese Daten umfassen beispielsweise die Identifikation der Wägezelle oder Abgleichdaten für die Temperatur und ähnliche. Wird nun eine Wägezelle neu in die Aufnahmestruktur eingesetzt, so wird unmittelbar nach Schliessen der Steckkontakte ihre Identität von einer hier nicht gezeigten Auswerteeinheit abgefragt und die entsprechenden Abgleichdaten werden zur Auswerteeinheit übertragen.

Die zweite Befestigungseinrichtung 713 besteht aus einem Sockel 729, an dem zwei Spreizstifte 715 sowie zwei Führungsstifte 717 befestigt sind. Je zwei Führungsstifte 717 und je zwei Spreizstifte 715 sind diagonal zueinander an den jeweiligen Ecken des Sockels 729 befestigt. Der Sockel 729 weist weiterhin eine Vertiefung 732 auf, welche eine Durchführung 733 umschliesst. Die Vertiefung 732 dient wiederum zur Aufnahme der Struktur 739, an welcher der elektrische Anschluss 724 der Wägezelle angeordnet ist. Die Durchführung 733 wird auf ihrer der Wägezelle 702 abgewandten Seite von einer weiteren Struktur begrenzt, in der sich die Anschlussbuchse 731 für den elektrischen Anschlussstecker 724 der Wägezelle 702 befindet.

In einigen der gezeigten Ausführungsvarianten weisen die Wägezellen einen Stecker auf, welcher beim Einbau einer Wägezelle in die Wägevorrichtung mit einer korrespondierenden Anschlussbuchse in Kontakt gebracht wird. Diese Trennung ist sehr vorteilhaft, da die elektrischen Zuleitungen somit in einer Grundplatte geführt sind, z. B. wie in den Figuren 5-7 gezeigt, in einer Aussparung der Grundplatte oder dem mit diesem verbundenen Sockel. Dies hat den Vorteil, dass die Zuleitungen durch die bevorzugt aus Metall gefertigte Grundplatte eine Abschirmung gegen elektromagnetische Störeinflüsse erfahren. Zudem können mechanische Spannung an den elektrischen Zuleitungen vermieden werden.

Neben den bereits gezeigten Ausgestaltungen der Wägezelle, ist es möglich, dass diese zusätzlich mit einer Hilfsvorrichtung ausgestattet ist. Eine derartige Hilfsvorrichtung kann z.B. als Griff aussen an der Wägezelle befestigt sein, so dass einzelne Wägezellen einfacher manuell und/oder mit einem geeigneten Werkzeug aus der Aufnahmestruktur entfernt werden können.

Weiterhin kann die Wägezelle mit einer Markierung und/oder Sicherung gegen falsches Einstecken ausgestattet sein, wie beispielsweise einfache farbige Markierungen, zusammenwirkenden Stifte und Nuten oder Bohrungen, etc.

Es ist auch denkbar, die Wägezelle mit einem sie eindeutig identifizierenden Code auszustatten, sei dies als Strichcode, als Matrixcode oder als passives Element einer RFID-Code Einrichtung. Ein entsprechendes Gegenstück ist beispielsweise an der Aufnahmestruktur angeordnet. Somit ist beispielsweise eine Sicherheitsschaltung realisierbar, die erst dann einen Wägevorgang zuliesse, wenn die dafür notwendigen Wägezellen in der Aufnahmestruktur in der richtigen Weise platziert wären. Identifikationsdaten und weitere Daten können jedoch auch in dem im Zusammenhang mit der Beschreibung der Figur 7 erwähnten Speicherchip 740 abgelegt sein.

Die erfindungsgemässe Wägevorrichtung wurde in einer bevorzugten Ausgestaltung beschrieben und dargestellt. Anhand der erfindungsgemässen Lehre sind jedoch weitere fachmännische Ausgestaltungen realisierbar.

### Bezugszeichenliste

- 1, 201, 301: Wägevorrichtung
- 2, 2a, 202, 302, 302a, 402, 602, 702: Wägezelle
- 3: Lastaufnahmebereich
- 4, 304: Kraftübertragungsgestänge
- 5, 305: Lastaufnehmer
- 6: Oberer Parallellenker
- 7, 307: feststehender Bereich
- 8, 208, 308, 408, 608: Grundplatte
- 10a, 210, 410, 610, 710: Erste Befestigungseinrichtung
- 11 a: Feder
- 12a: Kugel
- 13a, 213, 413, 613, 713: Zweite Befestigungseinrichtung
- 14a,414: Nut
- 215, 615, 715: Spreizstift
- 216, 616, 716: Bohrung
- 217, 617, 717: Führungsbolzen
- 218: Nocken
- 219, 619: weiterer Bolzen
- 220: Bauraum
- 321: Verbindungselement
- 322: Bohrung
- 323: Aussparung
- 424, 624, 724: Anschlussstecker
- 425: Durchführung
- 426: Bohrung
- 427: Absatz
- 428: Hülse
- 429: Sockel
- 430: Aufnahme
- 431, 631, 731: Anschlussbuchse
- 632, 732: Vertiefung
- 633, 733: Durchführung
- 634: Befestigungsplatte
- 635: Abstandshalter
- 337: Grundplatte
- 338: Aussparung
- 739: Print
- 740: Speicherchip

## Patentansprüche

1. Wägevorrichtung (1, 201, 301) mit mindestens einer Wägezelle (2, 2a, 202, 302, 302a, 402, 602, 702) und mit einer der Aufnahme mehrerer Wägezellen (2, 2a, 202, 302, 302a, 402, 602, 702) dienenden Aufnahmestruktur wobei die mindestens eine Wägezelle (2, 2a, 202, 302, 302a, 402, 602, 702) eine ihrer Befestigung in der Aufnahmestruktur dienende erste Befestigungseinrichtung (10a, 210, 410, 610, 710) und die Aufnahmestruktur eine dazu komplementäre zweite Befestigungseinrichtung (13a, 213, 413, 613, 713) aufweist, **dadurch gekennzeichnet, dass** die Befestigungseinrichtungen die Wägezelle mittels eines durch eine einfache, auf die Wägezelle (2, 2a, 202, 302, 302a, 402, 602, 702) einwirkende Betätigung ver- und entriegelbaren Formschlusses und/oder Kraftschlusses halten beziehungsweise freigeben, und dass die mindestens eine Wägezelle (2, 2a, 202, 302, 302a, 402, 602, 702) in der Aufnahmestruktur in einem Bauraum (220) angeordnet ist, dessen Ausdehnung in einer Ebene orthogonal zur Lastrichtung durch die Bauräume (220) benachbarter in der Aufnahmestruktur anzuordnender Wägezellen (2, 2a, 202, 302, 302a, 402, 602, 702) begrenzt ist.

2. Wägevorrichtung nach Anspruch 1, **dadurch gekennzeichnet, dass** die Aufnahmestruktur für die Aufnahme mehrerer Wägezellen (2, 2a, 202) in einer zweidimensionalen flächigen Matrixstruktur ausgestaltet ist.

3. Wägevorrichtung nach Anspruch 2, **dadurch gekennzeichnet, dass** die Aufnahmestruktur für die Aufnahme der Wägezellen (302, 302a) auf mehreren Ebenen ausgebildet ist.

4. Wägevorrichtung nach Anspruch 1, 2 oder 3, **dadurch gekennzeichnet, dass** die Aufnahmestruktur eine Grundplatte (8, 208, 308, 408, 608) aufweist, wobei die zweite Befestigungseinrichtung (13a, 213, 413, 613, 713) in der Grundplatte (8, 208, 308, 408, 608) und die erste Befestigungseinrichtung (10a, 210, 410, 610, 710) an der Unterseite der Wägezelle (2, 2a, 202, 302, 302a, 402, 602, 702) angeordnet ist.

5. Wägevorrichtung nach einem der Ansprüche 1 bis 4, **dadurch gekennzeichnet, dass** die Aufnahmestruktur eine Befestigungsplatte, in welcher die mindestens eine Wägezelle einhängbar ist, aufweist, wobei die zweite Befestigungseinrichtung in die Befestigungsplatte integriert ist.

6. Wägevorrichtung nach einem der Ansprüche 1 bis 5, **dadurch gekennzeichnet, dass** die zusammenwirkenden Befestigungseinrichtungen eine mechanische und/oder eine elektrische Verbindung zwischen der mindestens einen Wägezelle (402, 602, 702) und der Aufnahmestruktur herstellen.

7. Wägevorrichtung nach einem der Ansprüche 1 bis 6, **dadurch gekennzeichnet, dass** die Wägezelle ein Gehäuse aufweist und dass die erste Befestigungseinrichtung am Gehäuse angeordnet ist.

8. Wägevorrichtung nach einem der Ansprüche 1 bis 7, **dadurch gekennzeichnet, dass** die erste (10a, 210, 410, 610, 710) und die zweite Befestigungseinrichtung (13a, 213, 413, 613, 713) zusammenwirkend einen Rastmechanismus oder einen Schnappmechanismus aufweisen.

9. Wägevorrichtung nach einem der Ansprüche 1 bis 8, **dadurch gekennzeichnet, dass** die erste (10a, 210, 410, 610, 710) und/oder die zweite (13a, 213, 413, 613, 713) Befestigungseinrichtung eine Führungsvorrichtung aufweisen.

10. Wägevorrichtung nach Anspruch 8 oder 9, **dadurch gekennzeichnet, dass** die erste Befestigungseinrichtung (10a, 410) mindestens eine Nut (14a, 414) oder Vertiefung und die zweite Befestigungseinrichtung (13a, 413) mindestens zwei, insbesondere drei, auf Federelementen (11a) gelagerte Kugeln (12a, 412) aufweisen, wobei beim Einsetzen der Wägezelle in die Aufnahmestruktur die Kugeln (12a, 412) in die mindestens eine Nut (14a, 414) oder Vertiefung einrasten.

11. Wägevorrichtung nach Anspruch 8 oder 9, **dadurch gekennzeichnet, dass** die erste Befestigungseinrichtung (210, 610, 710) mindestens zwei Bohrungen (216, 616, 716) aufweist und die zweite Befestigungseinrichtung (213, 613, 713) mindestens zwei diagonal einander gegenüberliegend angeordnete Spreizstifte (215, 615, 715), wobei beim Einsetzen der Wägezelle (202, 602, 702) in die Aufnahmestruktur die Spreizstifte (215, 615, 715) in die Bohrung (216, 616, 716) einrasten.

12. Wägevorrichtung nach einem der Ansprüche 6 bis 11, **dadurch gekennzeichnet, dass** die mechanischen Befestigung und die elektrische Verbindung in der Aufnahmestruktur räumlich voneinander getrennt sind.

13. Wägevorrichtung nach einem der Ansprüche 1 bis 12, **dadurch gekennzeichnet, dass** jede Wägezelle (2, 2a, 202, 302, 302a, 402, 602, 702) mit einem sie eindeutig kennzeichnenden Code versehen ist und die Aufnahmestruktur ein entsprechendes den Code erfassendes Gegenstück aufweist.

14. Wägevorrichtung (nach einem der Ansprüche 1 bis 13, **dadurch gekennzeichnet, dass** jede Wägezelle (2, 2a, 202, 302, 302a, 402, 602, 702) einen Speicherchip (740) aufweist, auf welchem Abgleichs- und andere wägezellenspezifische Daten abgelegt sind.

15. Wägevorrichtung nach einem der Ansprüche 1 bis 14 zum Wiegen gleichgearteter Wägegüter mit einer vorgegebenen Anzahl von Wägezellen (2, 2a, 202, 302, 302a, 402, 602, 702) und einer gleichen Anzahl von Lastaufnehmern (5, 305).
